# EUROPÄISCHE PATENTSCHRIFT

(11) **EP 4 480 765 B1**
(45) Veröffentlichungstag und Bekanntmachung des Hinweises auf die Patenterteilung: **01.04.2026**
(21) Anmeldenummer: 24183783.0
(22) Anmeldetag: 21.06.2024
(51) Int. Cl.: B60T 7/10, B60T 11/00, B60T 11/04, B60T 11/10, B60T 11/12, B60T 11/18, B60T 13/08, B60T 13/26

(54) **BREMSSYSTEM**
BRAKING SYSTEM
SYSTÈME DE FREINAGE

(30) Priorität: 21.06.2023 DE 202023103455 U
(43) Veröffentlichungstag der Anmeldung: 25.12.2024
(73) Patentinhaber: Croozer GmbH, 50354 Hürth (DE)
(72) Erfinder: Mühler, Michel, 50126 Bergheim (DE); Stein, Farid, 51067 Köln (DE)
(74) Vertreter: Lenzing Gerber Stute

(56) Entgegenhaltungen:
- EP-A2- 0 805 083
- EP-A2- 2 022 688
- DE-A1- 102013 006 913
- DE-A1- 102022 101 063
- DE-U1- 9 410 842
- US-A- 3 666 060
- US-B2- 11 136 031

## Beschreibung

Die Erfindung betrifft ein Kopplungsmodul zum Verbinden mindestens eines Bremsbetätigers mit mindestens einem Bremsauslöser zum Auslösen einer Bremse eines Anhängers für ein Leichtfahrzeug. Die Erfindung betrifft auch ein Bremssystem für einen Anhänger für ein Leichtfahrzeug, mit mindestens einer Bremse und einem Bremsauslöser zum Auslösen der Bremse, wobei der Bremsauslöser auf der einen Seite mit der Bremse verbunden ist, und mindestens einer Bremsbetätigungseinrichtung zur Verwirklichung mindestens einer Funktion ausgewählt aus der Gruppe von Parkbremse, Betriebsbremse und Auflaufbremse. Außerdem betrifft die Anmeldung einen Anhänger für ein Leichtfahrzeug mit einem Bremssystem.

Unter einem Leichtfahrzeug wird ein mit Muskelkraft betreibbares Fahrzeug, insbesondere ein Fahrrad oder ein Tricycle, die auch elektromotorisch unterstützt sein können verstanden, aber auch ein Kleinkraftrad, wie etwa ein Moped, ein Mofa oder ein Roller.

Anhänger für Fahrräder erfreuen sich zunehmender Beliebtheit. So werden solche Anhänger zum Beispiel für den Transport von Kindern, Tieren oder Gütern angeboten.

Aus dem Stand der Technik sind verschiedene Arten von Bremsen für Fahrradanhänger bekannt. Es gibt unterschiedliche Arten der Verbindung zwischen Anhängern und Leichtfahrzeugen. So sind beispielsweise aus der DE 10 2013 006913 A1, der AT 504 023 A1, der DE 10 2008 029 990, der DE 10 2008 044 865 oder der WO 2008/017941 Auflaufbremsen bekannt, bei denen aufgrund einer Relativbewegung zwischen einer am Anhänger befestigten Deichsel und dem Fahrrad die in der Kupplung zur Befestigung der Deichsel am Fahrradanhänger auftretenden Kräfte für den Betrieb einer Auflaufbremse genutzt werden. Solche Bremsen sollen automatisch funktionieren.

Darüber hinaus ist aus der DE 20 2018 100 310 U1 eine manuelle Betriebsbremse für ein Leichtfahrzeug bekannt, bei dem eine Bremseinheit am Anhänger, die mit einem Signalempfänger ausgestattet ist, von einem Benutzer drahtlos über einen Sender gesteuert werden kann.

Schließlich sind auch Handbremsen für Fahrradanhänger bekannt. So sind seit vielen Jahren Fahrradanhänger der Anmelderin mit einer handbetätigten Feststellbremse ausgestattet, wie auch von Mitbewerbern der Anmelderin Multifunktions-Fahrradanhänger mit einer manuell betätigbaren Betriebsbremse für die Nutzungsart Kinderwagen vielfach angeboten werden.

Aufgabe der vorliegenden Erfindung ist es, ein optimiertes Bremssystem bereitzustellen.

Diese Aufgabe wird gemäß Anspruch 1 gelöst.

Der Begriff "eingangsseitig" ist hier und im Folgenden funktional zu verstehen. Auf die Eingangsseite des Kopplungsmoduls wirken die Kräfte, die von Bremsbetätigungseinrichtungen, beispielsweise von einem Hebel einer manuellen Betriebsbremse, dem Hebel einer Parkbremse oder aber dem deichselkupplungsseitigen Teil einer Auflaufbremse, auf das Kopplungsmodul wirken. Mit anderen Worten ist damit die Signaleingangsseite gemeint, mit der ein Auslösen der mindestens einen Bremse des Anhängers in Gang gesetzt wird.

Dementsprechend ist der Begriff "ausgangsseitig" ebenso funktional zu verstehen. An der Ausgangsseite des Kopplungsmoduls werden die an der Eingangsseite auf das Kopplungsmodul wirkenden Kräfte auf die Bremse(n) übertragen, wobei die Kräfte je nach Auslegung des Kopplungsmoduls wahlweise in gleicher Stärke oder in einem Übersetzungsverhältnis übertragen werden können, wobei die auf die Bremsen übertragenden Kräfte nicht nur größer, sondern auch geringer als die eingangsseitig wirkenden Kräfte sein können.

Unter einer Aufnahme, eingangsseitig wie ausgangsseitig, ist hier und im Folgenden jegliches konstruktives Element zu verstehen, das geeignet ist, Zug- und/oder Druckkräfte aufzunehmen (eingangsseitig) oder weiterzugeben (ausgangsseitig). Eine Aufnahme kann beispielsweise als eine von außen zugängliche Öse ausgebildet sein, um beispielsweise den Nippel eines Bowdenzuges aufzunehmen. Ebenso kann die Aufnahme als Haken ausgebildet sein, in das ein eingangsseitiges oder ausgangsseitiges Kraftübertragungselement eingehakt wird.

Unter einem Bremsauslöser wird hier und im Folgenden jedes Element verstanden, dass geeignet ist, auf eine Bremse zu wirken, um diese auszulösen, seien es Elemente einer Bremse selbst oder auch Elemente, die nicht unmittelbar Bestandteile einer Bremse sind, aber dazu gedacht sind, auf der Ausgangsseite des Kopplungsmoduls direkt oder indirekt auf die Bremse zu wirken. Als Bremse kommen jegliche Arten von Bremsen in Betracht, insbesondere solche, die auch aus der Fahrradtechnik bekannt sind, wie beispielsweise Scheibenbremsen, Felgenbremsen oder Trommelbremsen, die wahlweise rein mechanisch mit einem Bremszug oder beispielsweise auch hydraulisch betätigt werden können.

Mit der vorliegenden Erfindung ist es möglich, eine oder mehrere am Anhänger vorgesehene Bremsen in Mehrfachfunktion zu nutzen. Außerdem ist es mit dem Kopplungsmodul möglich, die Art der Übertragung einer Bremskraft von der Art der Kraftübertragung von der Betätigungseinrichtung zu entkoppeln. Beispielsweise kann eine hydraulische Scheibenbremse von einem hydraulischen Geber, der mit der mindestens einen ausgangsseitigen Aufnahme des Kopplungsmoduls gekoppelt ist, betätigt werden. Oder die Bremsbetätigungseinrichtung einer manuellen Betriebsbremse überträgt die Bremsbetätigungskraft auf eine der eingangsseitigen Aufnahmen des Kopplungsmoduls hydraulisch, wohingegen die ausgangsseitige Aufnahme des Kopplungsmoduls die Kräfte zum Auslösen der Bremse mechanisch über einen Bremszug oder eine auf die Bremse wirkende Bremsstange überträgt. Auch ist es im Prinzip möglich, an einer eingangsseitigen Aufnahme hydraulisch übertragene Kräfte aufzunehmen, während an einer anderen eingangsseitigen Aufnahme von einem Zugseil aufgenommene Zugkräfte aufgenommen werden können.

In einer bevorzugten Ausgestaltung der Erfindung ist das Kopplungsmodul mit einer Übersetzung derart eingerichtet, dass ein Übersetzungsverhältnis zwischen einer Kraft, die auf eine der eingangsseitigen Aufnahmen aufgebracht wird, und einer Kraft, die von der mindestens einen ausgangsseitigen Aufnahme übertragen wird, besteht. Das Übersetzungsverhältnis kann sowohl größer als auch kleiner als eins sein. Ein Übersetzungsverhältnis größer oder kleiner eins ist allerdings nicht notwendig, es kann je nach Art der Bremsbetätigungseinrichtung ebenso sinnvoll sein, die Kräfte im Verhältnis 1:1 auf die Bremsen zu übertragen.

Dabei ist es nicht notwendig, dass das Übersetzungsverhältnis von mehreren eingangsseitigen Aufnahmen auf die ausgangsseitige Aufnahme gleich ist. Vielmehr kann es ebenso von Vorteil sein, wenn die Übersetzungsverhältnisse von einer eingangsseitigen Aufnahme und einer anderen eingangsseitigen Aufnahme zu der jeweils gleichen ausgangsseitigen Aufnahme voneinander verschieden sind.

In einer bevorzugten Ausführungsform ist das erfindungsgemäße Kopplungsmodul mit mindestens einem Hebel als Übersetzungseinrichtung ausgebildet, wobei die eingangsseitigen und ausgangsseitigen Aufnahmen an mindestens dem einen Hebel ausgebildet sind und wobei sich das Übersetzungsverhältnis vorzugsweise aus den jeweiligen Abständen der eingangsseitigen Aufnahmen und der mindestens einen ausgangsseitigen Aufnahme zum Drehpunkt des Hebels ergibt. Letzteres ist dann der Fall, wenn alle Aufnahmen an einem Hebel ausgebildet sind. Es ist im Prinzip aber ebenso denkbar, die Übersetzungseinrichtung mit mehreren untereinander verbundenen Hebeln als Hebelgetriebe auszubilden, an denen die Aufnahmen verteilt angeordnet sind. Je nach Art der Verbindung der einzelnen Hebel untereinander können zwischen den Hebeln unterschiedliche Übersetzungsverhältnisse erzeugt werden.

In einer alternativen bevorzugten Ausgestaltung der Erfindung ist ein Getriebe vorgesehen, bei dem die eingangsseitigen Aufnahmen und die mindestens eine ausgangsseitige Aufnahme auf mindestens einem Rotationselement sitzen, wobei sich das Übersetzungsverhältnis aus dem Abstand jeweils einer der eingangsseitigen Aufnahmen zur Drehachse des mindestens einen Rotationselements und dem Abstand der mindestens einen ausgangsseitigen Aufnahme zur Drehachse des mindestens einen Rotationselements ergibt. Im Prinzip reicht es aus, wenn alle Aufnahmen an einem Rotationselement angeordnet sind. Ein Rotationselement ist typischerweise eine rotierend gelagerte Scheibe mit einer umfangsseitigen Stirnfläche mit einem Radius oder mehreren umfangsseitigen Stirnflächen unterschiedlicher Radii, wobei der oder die Aufnahmen in einer Stirnfläche eingelassen sein können. Die Aufnahmen können aber auch an anderer Stelle in das Rotationselement eingelassen oder angeformt sein. Das Rotationselement kann im Prinzip aber auch ein rotierend gelagerter, sich radial erstreckender Bolzen oder Steg sein, an oder in dem die Aufnahmen ausgebildet sind.

Besonders bevorzugt ist es, wenn für die mindestens eine ausgangsseitige Aufnahme ein Rotationselement und für die eingangsseitigen Aufnahmen mindestens ein Rotationselement, vorzugsweise für jede eingangsseitige Aufnahme und für jede ausgangsseitige Aufnahme jeweils ein Rotationselement, vorgesehen sind, wobei mindestens zwei der Rotationselemente über einen Freilauf miteinander gekoppelt sind. Hiermit kann sichergestellt werden, dass sich bei Einwirken einer Bremsbetätigungseinrichtung auf das Kopplungsmodul nur die von der Betätigungseinrichtung beaufschlagte eingangsseitige Aufnahme in Bewegung versetzt wird, während andere und vorzugsweise alle anderen Aufnahmen auf den anderen Rotationselementen in Ruhe bleiben.

Die Aufgabe wird gemäß Anspruch 7 auch gelöst mit einem Bremssystem für einen Anhänger für ein Leichtfahrzeug der eingangs genannten Art, das durch mindestens zwei verschiedene Bremsbetätigungseinrichtungen zur Verwirklichung mindestens zweier verschiedener Funktionen ausgewählt aus der Gruppe von Parkbremse, manueller Betriebsbremse und Auflaufbremse und durch ein erstes Kopplungsmodul der vorbeschriebenen Art, das die andere Seite des Bremsauslösers mit mindestens zwei der voneinander verschiedenen Bremsbetätigungseinrichtungen verbindet, so dass die Bremse mindestens zwei Funktionen ausgewählt aus der Gruppe von Parkbremse, manueller Betriebsbremse und Auflaufbremse erfüllen kann, gekennzeichnet ist.

Bei dem erfindungsgemäßen Bremssystem ist das Kopplungsmodul vorzugsweise mit einer Federkraft beaufschlagt, die einer vom Bremsauslöser auf die Bremse ausgeübten Kraft entgegenwirkt. Damit wird erreicht, dass die ausgangsseitige Aufnahme in eine Ruheposition zurückbewegt wird, sobald von ihr keine Kraft auf den Bremsauslöser und damit auf die Bremse mehr ausgeübt wird.

In einer weiteren bevorzugten Ausführungsform weist eine der Bremsbetätigungseinrichtungen des erfindungsgemäßen Bremssystems einen Stellantrieb für eine feststellbare Parkbremse auf, der auf das Kopplungsmodul wirkt. Insbesondere ist der Stellantrieb ein mittelbar oder unmittelbar auf das Kopplungsmodul wirkender, feststellbarer Bremshebel oder ein Motor. Damit kann mit dem Bremssystem die Funktion einer Parkbremse verwirklicht werden.

Alternativ oder in Ergänzung hierzu ist eine der Bremsbetätigungseinrichtungen vorzugsweise eingerichtet, zur Verwirklichung der Funktion einer Auflaufbremse in Abhängigkeit von der Relativgeschwindigkeit zwischen Fahrzeug und Anhänger auf das Kopplungsmodul zu wirken. Hierzu sind beispielsweise die aus dem eingangs zitierten Stand der Technik bekannten Lösungen zur Ausführung einer Auflaufbremse verwendbar. In weiterer vorteilhafter Alternative oder Ergänzung weist das Bremssystem eine manuell betätigbare, nicht feststellbare und auf das Kopplungsmodul wirkende Bremsbetätigungseinrichtung zur Verwirklichung einer manuellen Betriebsbremse auf.

Erfindungsgemäß ist mindestens eine der Bremsbetätigungseinrichtungen eingerichtet, eine Zugkraft auf das Kopplungsmodul auszuüben und weist ein Zugseil oder einen Bowdenzug auf.

Ähnlich wie auf der Ausgangsseite des Kopplungsmoduls ist es sinnvoll, wenn mindestens eine der Bremsbetätigungseinrichtungen mit einer Rückstelleinrichtung, insbesondere einer Rückstellfeder, ausgerüstet ist, wobei die Rückstellfeder in einer Alternative auf das Kopplungsmodul wirken kann, und zwar insbesondere dann, wenn die Kräfte der Bremsbetätigungseinrichtung über einen Bowdenzug auf das Kopplungsmodul übertragen werden.

Wie bereits eingangs erwähnt besteht eine bevorzugte Möglichkeit der Verbindung des Kopplungsmoduls mit einer Bremse darin, dass das Kopplungsmodul von der ausgangsseitigen Aufnahme über einen Bremszug auf die Bremse wirkt.

Noch eine weitere bevorzugte Ausgestaltung des erfindungsgemäßen Bremssystems ist gekennzeichnet durch mindestens zwei Bremsen, die über einen gemeinsamen Bremszug ausgelöst werden, und durch ein zweites Kopplungsmodul mit einem Rad, wobei das Rad verschieblich ist, wobei die Drehachse des Rades von der mindestens einen ausgangsseitigen Aufnahme des ersten Kopplungsmoduls über ein ausgangsseitiges Kraftübertragungselement mit einer Kraft beaufschlagt werden kann, und wobei der Bremszug um einen Teil des Radumfangs des Rades geführt ist, so dass sich das Rad bei Aufbringen einer Kraft durch das ausgangsseitige Kraftübertragungselement in Kraftrichtung verschieben und damit eine Zugkraft auf den Bremszug ausüben kann. Hiermit wird auf einfache Weise erreicht, dass ein Unterschied in der Länge des Bremszugabschnitts zwischen dem Kopplungsmodul und der einen sowie der anderen Bremse automatisch über das Rad ausgeglichen wird und so die vom Bremssystem ausgeübte Bremskraft gleichmäßig auf beide Bremsen verteilt wird.

Um dabei eine möglichst gleichförmige Führung des gemeinsamen Bremszuges zu den Bremsen hin zu ermöglichen, kann vorgesehen sein, dass der gemeinsame Bremszug auf jeder Seite zwischen Rad und Bremse über eine Umlenkrolle geführt ist.

Die Aufgabe wird gemäß Anspruch 14 auch durch einen Anhänger für ein Leichtfahrzeug mit einem erfindungsgemäßen Bremssystem gelöst.

Im Folgenden wird die Erfindung anhand von Figuren, in denen beispielhaft zwei erfindungsgemäße Ausführungsbeispiele der Erfindung dargestellt sind, näher erläutert.

Es zeigen
- Fig. 1: eine perspektivische Ansicht eines geschlossenen Gehäuses eines ersten Beispiels eines erfindungsgemäßen Kopplungsmoduls;
- Fig. 2: eine andere perspektivische Ansicht eines geschlossenen Gehäuses des in Figur 1 gezeigten Kopplungsmodus;
- Fig. 3: eine Aufsicht auf das Kopplungsmodul der Figur 1 mit entferntem Gehäuseoberteil, das ein im Gehäuseunterteil sitzendes Übersetzungsgetriebe zeigt;
- Fig. 4: eine perspektivische Ansicht eines Übersetzungsgetriebes des Kopplungsmoduls ohne Gehäuse;
- Fig. 5: eine perspektive Ansicht von Teilen des Übersetzungsgetriebes der Figur 4 mit einem ersten eingangsseitigen Getrieberad und einem ausgangsseitigen Getrieberad;
- Fig. 6: eine perspektive Ansicht von Teilen des Übersetzungsgetriebes der Figur 4 mit einem zweiten eingangsseitigen Getrieberad und dem ausgangsseitigen Getrieberad;
- Fig. 7: eine perspektive Ansicht von Teilen des Übersetzungsgetriebes der Figur 4 mit einem dritten eingangsseitigen Getrieberad und dem ausgangsseitigen Getrieberad;
- Fig. 8: eine Seitenansicht auf das geschlossene Kopplungsmodul der Figur 1;
- Fig. 9: eine perspektivische Ansicht eines geschlossenen Gehäuses eines zweiten Beispiels eines erfindungsgemäßen Kopplungsmoduls;
- Fig. 10: eine perspektivische Aufsicht auf das Kopplungsmodul der Figur 9 mit abgenommenem oberen Gehäuseteil; und
- Fig. 11: eine perspektivische Ansicht von unten auf das Kopplungsmodul der Figur 9 mit abgenommenem unteren Gehäuseteil.

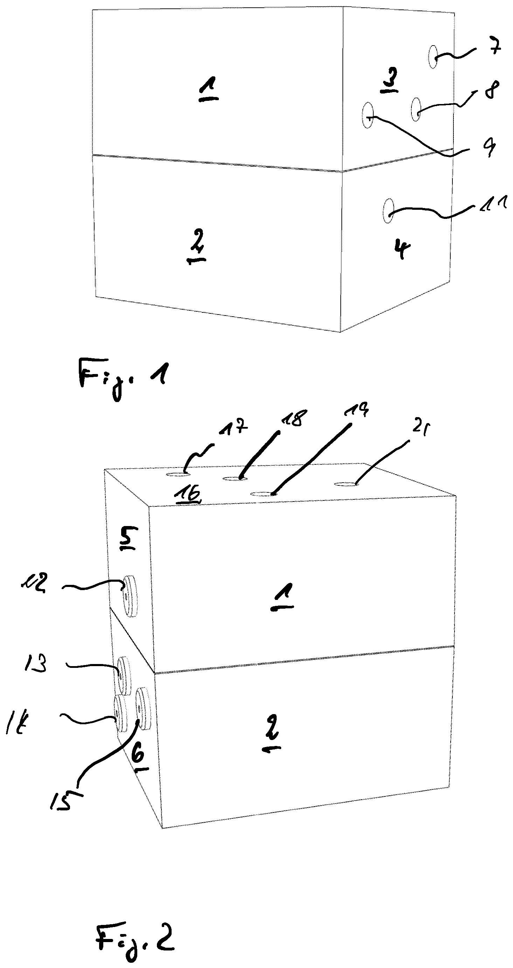

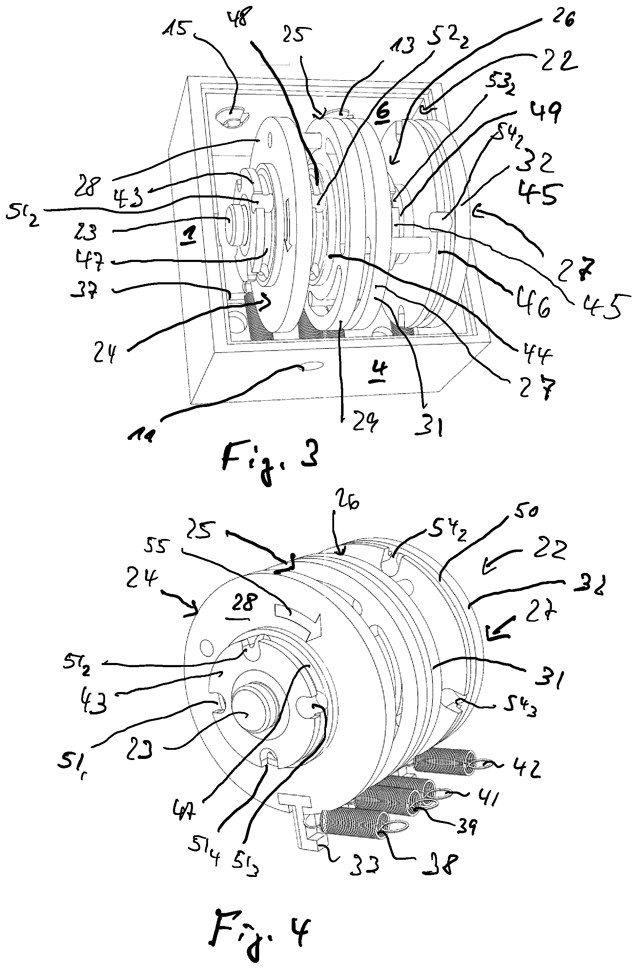

In den Figuren 1 bis 8 ist ein erstes Ausführungsbeispiel eines erfindungsgemäßen Kopplungsmoduls gezeigt. Wie insbesondere in den Figuren 1 und 2 zu sehen ist, weist das Kopplungsmodul ein quaderförmiges Gehäuseoberteil 1 und ein Gehäuseunterteil 2 auf. In die schmalen Stirnseiten des Gehäuses 3, 4, 5, 6 sind Öffnungen 7, 8, 9, 11, 12, 13, 14, 15 für hier nicht dargestellte Bowdenzüge eingelassen, die als Kraftübertragungselemente zwischen hier ebenso nicht dargestellten Bremsbetätigungseinrichtungen und dem Kopplungsmodul bzw. dem Kopplungsmodul und mindestens einer Bremse wirken. Auch an der Oberseite 16 des Gehäuses sind Öffnungen 17, 18, 19, 21 für solche Kraftübertragungselemente vorgesehen. Wie in Figur 3 gezeigt ist, ist im Gehäuse ein Übersetzungsgetriebe 22 angeordnet.

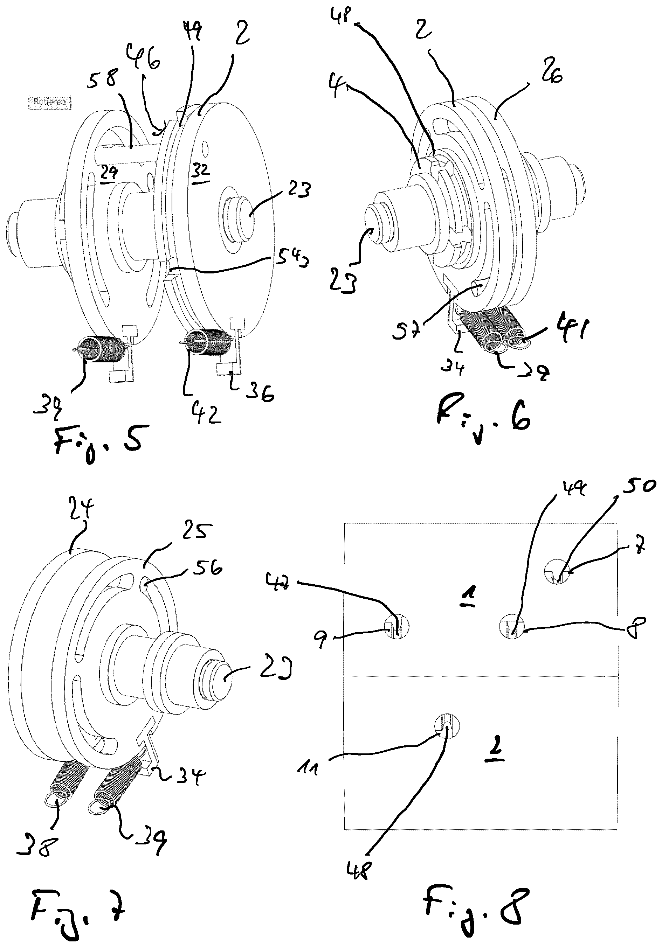

In den Figuren 3 bis 7 ist ein Übersetzungsgetriebe gezeigt, und zwar in Figur 3 vollständig innerhalb des geöffneten Gehäuses, in Figur 4 vollständig und ohne Gehäuse und in den Figuren 5 bis 7 jeweils ohne Gehäuse und lediglich in Teilen. Das Übersetzungsgetriebe 22 weist als wesentliche Bauteile eine feststehende Achse 23 und darauf drehbar gelagerte Getriebescheiben 24, 25, 26, 27 auf. Jede der Getriebescheiben 24, 25, 26, 27 weist einen ersten Scheibenabschnitt 28, 29, 31, 32 mit großem Außendurchmesser auf, wobei der große Außendurchmesser bei jeder der Getriebescheiben gleich ist. An der Unterseite jedes der ersten Scheibenabschnitte ist ein radial vorstehender Anschlag 33, 34, 35, 36 vorgesehen, der mit einer Anschlagkante 37 am Boden des Gehäuseunterteils 2 zusammenwirkt. Für jede der Getriebescheiben 24, 25, 26, 27 ist eine Rückstellfeder 38, 39, 41, 42 vorgesehen. Die Rückstellfeder 38, 39, 41, 42 sind jeweils an der Gehäuseinnenseite der schmalen Stirnseite 4 und den Anschlägen 33, 34, 35, 36 und drücken die Anschläge 33, 34, 35, 36 in Ruheposition an die Anschlagkante 37. Jede der Getriebescheiben 24, 25, 26, 27 weist zusätzlich einen zweiten Scheibenabschnitt 43, 44, 45, 46 auf, der mit dem ersten Scheibenabschnitt 28, 29, 42, 43 jeweils fest verbunden ist. Jeder der zweiten Scheibenabschnitte weist stirnseitig eine umlaufende Nut 47, 48, 49 auf. Darüber hinaus sind in jeden der zweiten Scheibenabschnitte stirnseitig jeweils um 90° versetzt vier ösenförmige, zur Stirnseite hin offene Aufnahmen 51ₓ, 52ₓ, 53ₓ, 54ₓ (ₓ=₁, ₂, ₃, ₄) eingelassen. Die Aufnahmen dienen zum Einsetzen eines Nippels am Ende eines Zugseils, Zugkabels, Bowdenzuges oder eines anderen vergleichbaren Kraftübertragungselementes, und die umlaufenden Nuten 47, 48, 49, 50 dazu, ein Kraftübertragungselement um einen Abschnitt des Umfangs des jeweiligen zweiten Scheibenabschnitts zu führen. Die Außendurchmesser der zweiten Scheibenabschnitte 43, 44, 45 sind gleich und deutlich kleiner als der Außendurchmesser der ersten Scheibenabschnitte 28, 29, 31, 32. Demgegenüber entspricht der Außendurchmesser des zweiten Scheibenabschnitts 46 dem des Außendurchmessers der ersten Scheibenabschnitte 28, 29, 31, 32 und ist damit etwa doppelt so groß wie der Außendurchmesser der zweiten Scheibenabschnitte 43, 44, 45.

Die Getriebescheiben 24, 26 und 27 samt ihrer Aufnahmen 51ₓ, 53ₓ und 54ₓ sind eingangsseitige Getriebeelemente zum Aufnehmen eingangsseitige Kraftübertragungselemente zur Aufnahme von Kräften von drei voneinander unabhängigen Bremsbetätigungseinrichtungen. Zur Übertragung von Drehmomenten in Richtung des Pfeils 55 weist jede der Getriebescheiben 24, 26 und 27 einen Mitnehmer 56, 57, 58 auf, der sich parallel zur Achse 23 erstreckt. Für die Mitnehmer 56, 57, 58 sind im ersten Scheibenabschnitt 29 der ausgangsseitigen Getriebescheibe 25 jeweils ein teilkreisförmiges Langloch 61, 62, 63 vorgesehen. In Ruheposition sitzt jeder der Mitnehmer 56, 57, 58 jeweils am in Pfeilrichtung vorderen Ende eines der Langlöcher 61, 62, 63. Wird die ausgangsseitige Getriebescheibe 25 durch eine der eingangsseitigen Getriebescheiben 24, 26 oder 28 ausgelenkt, können die anderen eingangsseitigen Getriebescheiben in ihrer Ruheposition verbleiben, da deren Mitnehmer in ihren Langlöchern an der ausgangsseitigen Getriebescheibe 25 frei laufen.

Fig. 8 zeigt, dass die Öffnungen 7, 8, 9, 11 mit jeweils einer der horizontalen Tangenten durch die umlaufenden Nuten 47, 48, 49, 50 der zweiten Scheibenabschnitte 43, 44, 45, 46 fluchten. Entsprechendes gilt für die Öffnungen 12, 13, 14, 15. Die Öffnungen 17, 18, 19, 21 fluchten mit jeweils einer der horizontalen Tangenten durch die umlaufenden Nuten 47, 48, 49, 50 der zweiten Scheibenabschnitte 43, 44, 45, 46. Damit ist es möglich, dem Übersetzungsgetriebe 22 Züge als Kraftübertragungselemente sowohl horizontal, als auch vertikal zuzuführen. Damit die Kraft eines eingangsseitigen, auf eine eingangsseitige Getriebescheibe 24, 26, 27 wirkenden Kraftübertragungselement auf ein ausgangsseitiges Kraftübertragungselement, das um die ausgangsseitige Getriebescheibe 25 herumgeführt ist, übertragen werden kann, müssen die eingangsseitigen Kraftübertragungselemente in einem Sinn um die eingangsseitigen Getriebescheiben herumgeführt werden, während das ausgangsseitige Kraftübertragungselement gegensinnig um die ausgangsseitige Getriebescheibe herumgeführt sein muss. Dabei bildet das Verhältnis der Radien einer umlaufenden Nut einer eingangsseitigen Getriebescheibe 24, 26, 27 zum Radius der umlaufenden Nut der ausgangsseitigen Getriebescheibe 25 das Übersetzungsverhältnis. Zwischen den eingangsseitigen Getriebescheiben 24, 26 und der ausgangsseitigen Getriebescheibe 25 beträgt das Übersetzungsverhältnis im gezeigten Ausführungsbeispiel etwa 1:1, zwischen der eingangsseitigen Getriebescheibe 27 und der ausgangsseitigen Getriebescheibe 25 beträgt das Übersetzungsverhältnis im gezeigten Ausführungsbeispiel etwa 2:1.

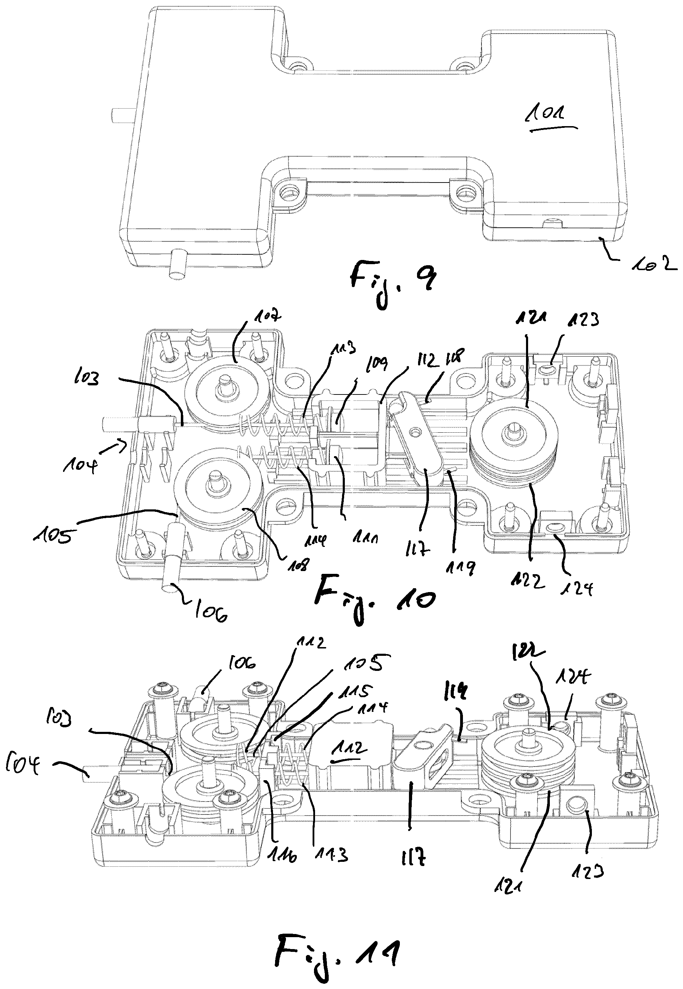

In den Figuren 9 bis 11 ist ein anderes Ausführungsbeispiel eines erfindungsgemäßen Kopplungsmoduls, diesmal zum Kombinieren zweier Bremsbetätigungseinrichtungen, dargestellt. Das Kopplungsmodul weist ein im Grundriss hantelförmiges Gehäuse mit einer Oberseite 101 und einer Unterseite 102 auf. Eingangsseitig sind ein erstes Zugkabel 103, das von einer nicht dargestellten ersten Bremsbetätigungseinrichtung mit einer Zugkraft beaufschlagt werden kann, durch eine erste eingangsseitige Öffnung 104 und ein zweites Zugkabel 105, das von einer nicht dargestellten zweiten Bremsbetätigungseinrichtung mit einer Zugkraft beaufschlagt werden kann, durch eine zweite eingangsseitige Öffnung 106 geführt. Zusätzlich sind Scheibenräder 107, 108 zur Führung der Zugkabel 103, 105 vorgesehen.

Die Enden der Zugkabel 103, 105 sind jeweils mit einem nietenartigen Endstück 109, 111 versehen, die beide in einem Schlitten 112 verankert sind. Der Schlitten 112 ist in dem mittleren Gehäuseteil geführt und in Richtung der Längsachse des Gehäuses verschiebbar. Der Schlitten 112 und/oder die Endstücke 109, 111 sind über jeweils eine Rückstellfeder 113, 114 gegenüber im Gehäuseinneren vorgesehene Stege 115, 116 mit einer Rückstellkraft beaufschlagt.

Auf der den Zugkabeln 103, 105 abgewandten Seite des Schlittens 112 ist eine mit diesem fest verbundene, sich quer zur Bewegungsrichtung des Schlittens erstreckende Wippe 117 angeordnet, an deren Enden jeweils ein Ende eines Bremszugs 118, 119 befestigt ist (hier nur im Ansatz gezeigt). Jedes der Bremszüge ist um etwa 90° um eine der beiden Umlenkrollen 121, 122 zur jeweiligen Ausgangsöffnung 123, 124 geführt.

Wird eines der beiden Zugkabel 103, 105 gezogen, folgt der Schlitten 112 dem Zug entgegen der Kraft der Rückstellfeder 113, 114, die auf Seite des ziehenden Zugkabels wirkt. Das andere Zugkabel 103, 105 wird durch die Rückstellfeder 113, 114, die nicht auf der Seite des gezogenen Zugkabels wirkt, straff gehalten. Mit dem Schlitten 112 folgt auch die Wippe 117 dem Zug des einen Zugkabels 103, 105, so dass die Bremszüge 118, 119 angezogen und damit verbundene Bremsen betätigt werden. Die Wippe hat dabei die Funktion, etwaige Längenunterschiede in den Ansprechwegen der Bremsen auszugleichen, so dass an allen Bremsen die gleiche Kraft wirken kann.

Mit dem gleichen Effekt kann anstelle der Wippe ein freilaufendes, horizontal liegendes Ausgleichsrad vorgesehen sein, dessen Achse fest mit dem Schlitten verbunden ist und an dem nicht wie bei der Wippe zwei Bremszüge befestigt sind, sondern um das ein Bremszug herum geführt ist, dessen Enden mit zwei verschiedenen Bremsen gekoppelt sind.

Bei beiden gezeigten Ausführungsbeispielen ist es möglich, einer oder mehreren Bremsen unterschiedliche Funktionen zukommen zu lassen, insbesondere die Funktionen einer manuellen Betriebsbremse, einer Parkbremse oder einer Auflaufbremse.

### Bezugszeichenliste

- 1: Gehäuseoberteil
- 2: Gehäuseunterteil
- 3, 4: schmale Stirnseiten Gehäuseoberteil
- 5, 6: schmale Stirnseiten Gehäuseunterteil
- 7-9: Öffnungen im Gehäuse
- 11-15: Öffnungen im Gehäuse
- 16: Oberseite des Gehäuses
- 17-19, 21: Öffnungen im Gehäuse
- 22: Übersetzungsgetriebe
- 23: feststehende Achse
- 24-27: Getriebescheiben
- 28, 29: erste Scheibenabschnitte
- 31, 32: erste Scheibenabschnitte
- 33-36: radial vorstehende Anschläge
- 37: Anschlagkante
- 38, 39, 41, 42: Rückstellfedern
- 43-46: zweite Scheibenabschnitte
- 47-50: stirnseitig umlaufende Nuten
- 51ₓ, 52ₓ, 53ₓ, 54ₓ: Aufnahmen
- 55: Pfeil
- 56-58: Mitnehmer
- 61-63: Langlöcher
- 101: oberer Gehäuseteil
- 102: unterer Gehäuseteil
- 103: Zugkabel
- 104: eingangsseitige Öffnung
- 105: Zugkabel
- 106: eingansseitige Öffnung
- 107, 108: Scheibenräder
- 109, 111: Endstücke
- 112: Schlitten
- 113, 114: Rückstellfedern
- 115, 116: Stege
- 117: Wippe
- 118, 119: Bremszüge

## Patentansprüche

1. Kopplungsmodul zum Verbinden mindestens eines Bremsbetätigers mit mindestens einem Bremsauslöser zum Auslösen einer Bremse eines Anhängers für ein Leichtfahrzeug, mit mindestens zwei eingangsseitige Aufnahmen (51, 53, 54) für eingangsseitige Kraftübertragungselemente zur Aufnahme von Kräften von zwei voneinander unabhängigen Bremsbetätigungseinrichtungen, mit mindestens einer ausgangsseitigen Aufnahme (52) für ein ausgangsseitiges Kraftübertragungselement zum Betätigen der mindestens einen Bremse, wobei die eingangsseitigen Aufnahmen (51, 53, 54) mit der mindestens einen ausgangsseitigen Aufnahme (52) derart verbunden sind, dass bei Aufbringen einer Kraft von einer Bremsbetätigungseinrichtung auf eine der eingangsseitigen Aufnahmen (51, 53, 54) eine Kraft auf die mindestens eine ausgangsseitige Aufnahme (52) und damit auf einen damit verbundenen Bremsauslöser ausgeübt wird, **dadurch gekennzeichnet, dass** die eingangsseitigen Kraftübertragungselemente jeweils ein Zugseil oder einen Bowdenzug aufweisen.

2. Kopplungsmodul nach Anspruch 1, **gekennzeichnet durch** eine Übersetzungseinrichtung, so dass ein Übersetzungsverhältnis zwischen einer Kraft, die auf eine der eingangsseitigen Aufnahmen (51, 53, 54) aufgebracht wird, und einer Kraft, die von der mindestens einen ausgangsseitigen Aufnahme (52) übertragen wird, besteht.

3. Kopplungsmodul nach Anspruch 2, **dadurch gekennzeichnet, dass** das Übersetzungsverhältnis zwischen der einen eingangsseitigen Aufnahme (51, 53, 54) und der mindestens einen ausgangsseitigen Aufnahme (52) von dem Übersetzungsverhältnis einer anderen eingangsseitigen Aufnahme (51, 53, 54) und der mindestens einen ausgangsseitigen Aufnahme (52) verschieden sind.

4. Kopplungsmodul nach Anspruch 2 oder 3, **gekennzeichnet durch** mindestens einen Hebel als Übersetzungseinrichtung, wobei die eingangsseitigen und ausgangsseitigen Aufnahmen an mindestens dem einen Hebel ausgebildet sind und wobei sich das Übersetzungsverhältnis vorzugsweise aus den jeweiligen Abständen der eingangsseitigen Aufnahmen und der mindestens einen ausgangsseitigen Aufnahme zum Drehpunkt des Hebels ergibt.

5. Kopplungsmodul nach einem der Ansprüche 2 bis 4, **gekennzeichnet durch** ein Getriebe, wobei die eingangsseitigen Aufnahmen (51, 53, 54) und die mindestens eine ausgangsseitige Aufnahme (52) auf mindestens einem Rotationselement sitzen, wobei sich das Übersetzungsverhältnis aus dem Abstand jeweils einer der eingangsseitigen Aufnahmen zur Drehachse des mindestens einen Rotationselements und dem Abstand der mindestens einen ausgangsseitigen Aufnahme zur Drehachse des mindestens einen Rotationselements ergibt.

6. Kopplungsmodul nach Anspruch 5, **dadurch gekennzeichnet, dass** für die mindestens eine ausgangsseitige Aufnahme (52) ein Rotationselement und für die eingangsseitigen Aufnahmen (51, 53, 54) mindestens ein Rotationselement, vorzugsweise für jede eingangsseitige Aufnahme (51, 53, 54) und für jede ausgangsseitige Aufnahme (52) jeweils ein Rotationselement, vorgesehen sind, wobei mindestens zwei der Rotationselemente über einen Freilauf miteinander gekoppelt sind.

7. Bremssystem für einen Anhänger für ein Leichtfahrzeug, mit mindestens einer Bremse und einem Bremsauslöser zum Auslösen der Bremse, wobei der Bremsauslöser auf der einen Seite mit der Bremse verbunden ist, und mindestens einer Bremsbetätigungseinrichtung zur Verwirklichung mindestens einer Funktion ausgewählt aus der Gruppe von Parkbremse, Betriebsbremse und Auflaufbremse, **gekennzeichnet durch** mindestens zwei verschiedene Bremsbetätigungseinrichtungen zur Verwirklichung mindestens zweier verschiedener Funktionen ausgewählt aus der Gruppe von Parkbremse, manuellen Betriebsbremse und Auflaufbremse, und durch ein erstes Kopplungsmodul nach einem der vorstehenden Ansprüche, das die andere Seite des Bremsauslösers mit mindestens zwei der voneinander verschiedenen Bremsbetätigungseinrichtungen verbindet, so dass die Bremse mindestens zwei Funktionen ausgewählt aus der Gruppe von Parkbremse, manueller Betriebsbremse und Auflaufbremse erfüllen kann, und wobei mindestens eine der Bremsbetätigungseinrichtungen eingerichtet ist, eine Zugkraft auf das Kopplungsmodul auszuüben und ein Zugseil oder einen Bowdenzug aufweist.

8. Bremssystem nach Anspruch 7, **dadurch gekennzeichnet, dass** das Kopplungsmodul mit einer Federkraft beaufschlagt ist, die einer vom Bremsauslöser auf die Bremse ausgeübten Kraft entgegenwirkt.

9. Bremssystem nach Anspruch 7 oder 8, **dadurch gekennzeichnet, dass** eine der Bremsbetätigungseinrichtungen einen Stellantrieb für eine feststellbare Parkbremse aufweist, der auf das Kopplungsmodul wirkt, insbesondere ein mittelbar oder unmittelbar auf das Kopplungsmodul wirkender, feststellbarer Bremshebel oder ein Motor zur Verwirklichung der Funktion einer Parkbremse, und/oder dass eine der Bremsbetätigungseinrichtungen eingerichtet ist, zur Verwirklichung der Funktion einer Auflaufbremse in Abhängigkeit von der Relativgeschwindigkeit zwischen Fahrzeug und Anhänger auf das Kopplungsmodul zu wirken, und/oder das eine der Bremsbetätigungseinrichtungen eine manuell betätigbare, nicht feststellbare und auf das Kopplungsmodul wirkende Bremsbetätigungseinrichtung zur Verwirklichung einer manuellen Betriebsbremse ist.

10. Bremssystem nach einem der Ansprüche 7 bis 9, **dadurch gekennzeichnet, dass** mindestens eine der Bremsbetätigungseinrichtungen mit einer Rückstelleinrichtung, insbesondere einer Rückstellfeder (113, 114), ausgerüstet ist.

11. Bremssystem nach einem der Ansprüche 7 bis 10, **dadurch gekennzeichnet, dass** das Kopplungsmodul über einen ausgangsseitig vorgesehenen Bremszug (118, 119) auf die Bremse wirkt.

12. Bremssystem nach einem der Ansprüche 7 bis 11, **gekennzeichnet durch** mindestens zwei Bremsen, die über einen gemeinsamen Bremszug ausgelöst werden, und durch ein zweites Kopplungsmodul mit einem Rad, wobei das Rad verschieblich ist, wobei die Drehachse des Rades von der mindestens einen ausgangsseitigen Aufnahme des ersten Kopplungsmoduls über ein ausgangsseitiges Kraftübertragungselement mit einer Kraft beaufschlagt werden kann, und wobei der Bremszug um einen Teil des Radumfangs des Rades geführt ist, so dass sich das Rad bei Aufbringen einer Kraft durch das ausgangsseitige Kraftübertragungselement in Kraftrichtung verschieben und das Rad damit eine Zugkraft auf den Bremszug ausüben kann.

13. Bremssystem nach Anspruch 12, **dadurch gekennzeichnet, dass** der gemeinsame Bremszug auf jeder Seite zwischen Rad und Bremse über eine Umlenkrolle geführt ist.

14. Anhänger für ein Leichtfahrzeug, insbesondere Fahrrad oder Pedelec, mit einem Bremssystem nach einem der Ansprüche 7 bis 13.

## Claims

1. Coupling module for connecting at least one brake actuator to at least one brake trigger for triggering a brake of a trailer for a light vehicle, with at least two input-side receptacles (51, 53, 54) for input-side force transmission elements for receiving forces from two brake actuating devices that are independent of each other, with at least one output-side receptacle (52) for an output-side force transmission element for actuating the at least one brake, wherein the input-side receptacles (51, 53, 54) are connected to the at least one output-side receptacle (52) in such a way that when a force is applied by a brake actuating device to one of the input-side receptacles (51, 53, 54), a force is exerted on the at least one output-side receptacle (52) and thus on a brake trigger connected thereto, **characterized in that** the input-side force transmission elements each comprise a pull cord or a Bowden cable.

2. Coupling module according to claim 1, **characterized by** a transmission device such that there is a transmission ratio between a force applied to one of the input-side receptacles (51, 53, 54) and a force transmitted by the at least one output-side receptacle (52).

3. Coupling module according to claim 2, **characterized in that** the transmission ratio between the one input-side receptacle (51, 53, 54) and the at least one output-side receptacle (52) differs from the transmission ratio of another input-side receptacle (51, 53, 54) and the at least one output-side receptacle (52).

4. Coupling module according to claim 2 or 3, **characterized by** at least one lever as a transmission device, wherein the input-side and output-side receptacles are formed on at least the one lever and wherein the transmission ratio is preferably determined by the respective distances of the input-side receptacles and the at least one output-side receptacle from the pivot point of the lever.

5. Coupling module according to one of claims 2 to 4, **characterized by** a gear, wherein the input-side receptacles (51, 53, 54) and the at least one output-side receptacle (52) are located on at least one rotational element, wherein the transmission ratio is determined by the distance between each of the input-side receptacles and the axis of rotation of the at least one rotational element and the distance between the at least one output-side receptacle and the axis of rotation of the at least one rotational element.

6. Coupling module according to claim 5, **characterized in that** a rotation element is provided for the at least one output-side receptacle (52) and at least one rotation element is provided for the input-side receptacles (51, 53, 54), preferably one rotation element for each input-side receptacle (51, 53, 54) and one rotation element for each output-side receptacle (52), wherein at least two of the rotational elements are coupled to each other via a freewheel.

7. Brake system for a trailer for a light vehicle, with at least one brake and a brake trigger for triggering the brake, wherein the brake trigger is connected to the brake on one side, and at least one brake actuating device for performing at least one function selected from the group consisting of parking brake, service brake, and overrun brake, **characterized by** at least two different brake actuators for performing at least two different functions selected from the group consisting of parking brake, manual service brake, and overrun brake, and by a first coupling module according to one of the preceding claims, which connects the other side of the brake trigger to at least two of the mutually different brake actuating devices, so that the brake can perform at least two functions selected from the group consisting of parking brake, manual service brake, and overrun brake, and wherein at least one of the brake actuators is arranged to exert a tensile force on the coupling module and has a pull cord or a Bowden cable.

8. Brake system according to claim 7, **characterized in that** the coupling module is subjected to a spring force that counteracts a force exerted on the brake by the brake trigger.

9. Brake system according to claim 7 or 8, **characterized in that** one of the brake actuators has an actuator for a lockable parking brake which acts on the coupling module, in particular a lockable brake lever acting directly or indirectly on the coupling module or a motor for performing the function of a parking brake, and/or that one of the brake actuators is designed to act on the coupling module to perform the function of an overrun brake depending on the relative speed between the vehicle and the trailer, and/or that one of the brake actuating devices is a manually operable, non-lockable brake actuating device acting on the coupling module to perform a manual service brake function.

10. Brake system according to one of claims 7 to 9, **characterized in that** at least one of the brake actuators is equipped with a return device, in particular a return spring (113, 114).

11. Brake system according to one of claims 7 to 10, **characterized in that** the coupling module acts on the brake via a brake cable (118, 119) provided on the output side.

12. Brake system according to one of claims 7 to 11, **characterized by** at least two brakes that are activated via a common brake cable, and by a second coupling module with a wheel, wherein the wheel is displaceable, wherein the axis of rotation of the wheel can be acted upon by a force from the at least one output-side receptacle of the first coupling module via an output-side force transmission element, and wherein the brake cable is guided around a portion of the wheel circumference of the wheel, so that when a force is applied by the output-side force transmission element, the wheel can move in the direction of the force and the wheel can thus exert a tensile force on the brake cable.

13. Braking system according to claim 12, **characterized in that** the common brake cable guided on each side between the wheel and the brake via a deflection roller.

14. Trailer for a light vehicle, in particular a bicycle or pedelec, with a braking system according to one of claims 7 to 13.

## Revendications

1. Module d'accouplement pour relier au moins un actionneur de frein à au moins un déclencheur de frein afin de déclencher un frein d'une remorque pour un véhicule léger, comportant au moins deux logements côté entrée (51, 53, 54) pour des éléments de transmission de force côté entrée destinés à absorber les forces de deux dispositifs d'actionnement de frein indépendants l'un de l'autre, avec au moins un logement côté sortie (52) pour un élément de transmission de force côté sortie destiné à actionner l'au moins un frein, les logements côté entrée (51, 53, 54) étant reliés au moins à un logement côté sortie (52) de telle sorte que, lorsqu'une force est appliquée par un dispositif d'actionnement de frein sur l'un des logements côté entrée (51, 53, 54), une force est exercée sur l'au moins un logement côté sortie (52) et donc sur un déclencheur de frein qui lui est relié, **caractérisé en ce que** les éléments de transmission de force côté entrée comportent chacun un câble de traction ou un câble Bowden.

2. Module d'accouplement selon la revendication 1, **caractérisé par** un dispositif de transmission, de sorte qu'il existe un rapport de transmission entre une force appliquée à l'un des logements côté entrée (51, 53, 54) et une force transmise par au moins un logement côté sortie (52).

3. Module d'accouplement selon la revendication 2, **caractérisé en ce que** le rapport de transmission entre le logement côté entrée (51, 53, 54) et l'au moins un logement côté sortie (52) est différent du rapport de transmission entre un autre logement côté entrée (51, 53, 54) et l'au moins un logement côté sortie (52).

4. Module d'accouplement selon la revendication 2 ou 3, **caractérisé par** au moins un levier servant de dispositif de transmission, les logements côté entrée et côté sortie étant formés sur au moins un levier et le rapport de transmission résultant de préférence des distances respectives entre les logements côté entrée et l'au moins un logement côté sortie par rapport au point de pivotement du levier.

5. Module d'accouplement selon l'une des revendications 2 à 4, **caractérisé par** un engrenage, les logements côté entrée (51, 53, 54) et l'au moins un logement (52) côté sortie étant placés sur au moins un élément rotatif, le rapport de transmission résultant de la distance entre chacun des logements côté entrée et l'axe de rotation de l'au moins un élément rotatif et de la distance entre l'au moins un logement côté sortie et l'axe de rotation de l'au moins un élément rotatif.

6. Module d'accouplement selon la revendication 5, **caractérisé en ce qu'**un élément rotatif est prévu pour au moins un logement côté sortie (52) et au moins un élément rotatif est prévu pour les logements côté entrée (51, 53, 54), de préférence un élément rotatif pour chaque logement côté entrée (51, 53, 54) et chaque logement côté sortie (52), au moins deux des éléments rotatifs étant couplés entre eux par l'intermédiaire d'une roue libre.

7. Système de freinage pour une remorque destinée à un véhicule léger, comprenant au moins un frein et un déclencheur de frein pour déclencher le frein, le déclencheur de frein étant relié d'un côté au frein, et au moins un dispositif d'actionnement de frein pour réaliser au moins une fonction choisie parmi le groupe comprenant le frein de stationnement, le frein de service et le frein à inertie, **caractérisé par** au moins deux dispositifs d'actionnement de frein différents pour réaliser au moins deux fonctions différentes choisies parmi le groupe comprenant le frein de stationnement, le frein de service manuel et le frein à inertie, et par un premier module d'accouplement selon l'une des revendications précédentes, qui relie l'autre côté du déclencheur de frein à au moins deux des dispositifs de déclenchement de frein différents les uns des autres, de sorte que le frein peut remplir au moins deux fonctions choisies parmi le groupe comprenant le frein de stationnement, le frein de service manuel et le frein à inertie, et dans lequel au moins l'un des dispositifs d'actionnement de frein est conçu pour exercer une force de traction sur le module d'accouplement et comporte un câble de traction ou un câble Bowden.

8. Système de freinage selon la revendication 7, **caractérisé en ce que** le module d'accouplement est soumis à une force de ressort qui s'oppose à une force exercée par le déclencheur de frein sur le frein.

9. Système de freinage selon la revendication 7 ou 8, **caractérisé en ce que** l'un des dispositifs d'actionnement de frein présente un servomoteur pour un frein de stationnement verrouillable qui agit sur le module d'accouplement, en particulier un levier de frein verrouillable agissant directement ou indirectement sur le module d'accouplement ou un moteur pour réaliser la fonction d'un frein de stationnement, et/ou **en ce que** l'un des dispositifs d'actionnement de frein est conçu pour agir sur le module d'accouplement en fonction de la vitesse relative entre le véhicule et la remorque afin de réaliser la fonction d'un frein à inertie, et/ou **en ce que** l'un des dispositifs d'actionnement de frein est un dispositif d'actionnement de frein à commande manuelle, non verrouillable et agissant sur le module d'accouplement pour réaliser un frein de service manuel.

10. Système de freinage selon l'une des revendications 7 à 9, **caractérisé en ce qu'**au moins l'un des dispositifs d'actionnement de frein est équipé d'un dispositif de rappel, en particulier d'un ressort de rappel (113, 114).

11. Système de freinage selon l'une des revendications 7 à 10, **caractérisé en ce que** le module d'accouplement agit sur le frein par l'intermédiaire d'un câble de frein (118, 119) prévu côté sortie.

12. Système de freinage selon l'une des revendications 7 à 11, **caractérisé par** au moins deux freins qui sont déclenchés par un câble de frein commun et par un deuxième module d'accouplement avec une roue, la roue étant mobile, l'axe de rotation de la roue pouvant être soumis à une force par l'au moins un logement côté sortie du premier module d'accouplement par l'intermédiaire d'un élément de transmission de force côté sortie, et le câble de frein étant guidé autour d'une partie de la circonférence de la roue, de sorte que la roue peut se déplacer dans le sens de la force lorsqu'une force est appliquée par l'élément de transmission de force côté sortie et que la roue peut ainsi exercer une force de traction sur le câble de frein.

13. Système de freinage selon la revendication 12, **caractérisé en ce que** le câble de frein commun est guidé de chaque côté entre la roue et le frein via une poulie de renvoi.

14. Remorque pour un véhicule léger, en particulier un vélo ou un vélo électrique, avec un système de freinage selon l'une des revendications 7 à 13.
